# NEUE EUROPÄISCHE PATENTSCHRIFT

(11) **EP 0 788 468 B2**
(45) Veröffentlichungstag und Bekanntmachung des Hinweises auf die Entscheidung über den Einspruch: **20.02.2013**
(45) Hinweis auf die Patenterteilung: 16.02.2000
(21) Anmeldenummer: 95935944.9
(22) Anmeldetag: 17.10.1995
(51) Int. Cl.: C04B 35/573, C04B 35/80, F16D 69/02

(54) **VERFAHREN ZUR HERSTELLUNG EINER REIBEINHEIT**
METHOD OF MANUFACTURING A FRICTION ELEMENT
PROCEDE DE PRODUCTION D'UNE UNITE DE FRICTION

(30) Priorität: 28.10.1994 DE 4438455
(43) Veröffentlichungstag der Anmeldung: 13.08.1997
(73) Patentinhaber: Deutsches Zentrum für Luft- und Raumfahrt e.V., 51147 Köln (DE)
(72) Erfinder: KRENKEL, Walter, D-71634 Ludwigsburg (DE); KOCHENDÖRFER, Richard, D-70619 Stuttgart (DE)
(74) Vertreter: Grimm, Ekkehard
(86) Internationale Anmeldenummer: PCT/EP1995/004079
(87) Internationale Veröffentlichungsnummer: WO 1996/013470

(56) Entgegenhaltungen:
- EP-A- 0 051 535
- EP-A- 0 300 756
- EP-A2- 0 370 472
- EP-A2- 0 541 917
- DE-A- 4 127 113
- DE-A1- 2 219 770
- DE-A1- 2 507 264
- DE-A1- 2 615 651
- DE-A1- 3 107 025
- DE-A1- 3 224 873
- DE-A1- 3 432 926
- DE-A1- 3 437 800
- DE-A1- 3 540 290
- DE-A1- 4 106 888
- DE-A1- 4 207 009
- DE-A1- 4 237 655
- GB-A- 1 457 757
- US-A- 3 639 197
- US-A- 3 809 192
- KRENKEL W. ET AL: 'Microstructure and Characteristics of CMC Manufactured via the Liquid Phase Route' CERAMIC MATRIX COMPOSITES AND OTHER SYSTEMS; ICCM/9 Bd. 2, 12 Juli 1993 - 16 Juli 1993, Seiten 173 - 181, XP008068257
- GADOW R.: 'Die Silizierung von Kohlenstoff', 1986 XP001202196
- HILLIG W. B.: 'Melt infiltration approach to ceramic matrix composites' J.AM. CERAM. SOC. Bd. 71, Nr. 2, 1988, Seiten C96 - C99, XP008068250
- MAZDIYASNI K. S.: 'Fiber reinforced ceramic composites', 1990, NOYES PUBLICATIONS, NEW JERSEY vol. HILLIG W. B.: 'Melt Infiltration Process for Making Ceramic Matrix Composites', XP008068262

## Beschreibung

Die vorliegende Erfindung bezieht sich auf ein Verfahren zur Herstellung einer Reibeinheit.

Ein Verfahren zur Herstellung einer Reibeinheit wurde von einer Arbeitsgruppe der DLR (Deutsche Forschungsanstalt für Luft- und Raumfahrt e.V.), Stuttgart, Institut für Bauweisen- und Konstruktionsforschung, auf dem VDI-Werkstofftag 1994 in Duisburg am 09./10.03.1994, der unter der Thematik "Leichtbaustrukturen und leichte Bauteile" stand, im Rahmen des Vortrags "Entwicklung integraler Leichtbaustrukturen aus Faserkeramik" vorgestellt. Im Rahmen dieses Vortrags wurde eine Technologie zur Herstellung von kohlenstoffaserverstärkten Kohlenstoffen vorgestellt. Die Kohlenstoffaserverstärkten Kohlenstoffe werden nach einem sogenannten "Flüssig-Silizier-Verfahren" mit flüssigem Silizium infiltriert und einer Wärmbehandlung unterworfen, wobei das Silizium sich mit Kohlenstoff zu SiC umwandelt. Ein mögliches Anwendungsgebiet dieser C/C-SiC-Werkstoffe sind unter anderem Bremsscheiben (siehe auch GB-A-1 457 757).

An Bremsen, insbesondere im Kraftfahrzeug- und Flugzeugbau, werden zunehmend höhere Anforderungen gestellt. Die Geschwindigkeiten, die heutzutage mit solchen Fahrzeugen erzielt werden, nehmen ständig zu. Beim Abbremsen wird diese kinetische Energie durch Reibung in Wärme umgewandelt, die durch die Bremsscheibe und die Bremsbeläge absorbiert wird. Eine solche Bremsenanordnung ist demzufolge durch die Reibungscharakteristiken des Bremsenmaterials und seine Eigenschaft, Wärme zu speichern und abzuführen, begrenzt. Allgemein müssen Bremsmaterialien sehr gute thermomechanische Eigenschaften, hohe und konstante Reibungscharakteristiken und eine gute Abrasionsbeständigkeit besitzen. In den letzten Jahren entwickelte Bremsen aus kohlenstoffaserverstärkten Kohlenstoffmaterialien (C/C), wie sie beispielsweise in der DE-A-30 24 200 beschrieben sind, ermöglichen Temperaturen bis zu 1000 °C.

Auf der vorstehend angeführten VDI-Tagung wurde, wie angeführt, ein C/C-SiC-Werkstoff vorgestellt, der gegenüber einem C/C-Werkstoff deutliche Vorteile vor allem in Bezug auf Thermoschockbeständigkeit, Oxidationsbeständigkeit, Feuchteaufnahme und Reibverhalten zeigt.

In der EP-A-300756 sind Bremseinheiten beschrieben, bei denen auf einen Kohlenstoff-Kernkörper ein Siliziumpulver aufgebracht wird und erhitzt wird, so daß sich das Pulver in Verbindung mit dem Kohlenstoff-Kern körper zu SiC umwandelt. Hierbei entsteht ein Reibkörper, bei dem auf einer Kohlenstoffstruktur in der Endphase die Reibfläche aus einer Schicht aus Siliziumkarbid besteht, und zwar nur im Bereich einer definierten Dicke zwischen 0,38 mm und 3,8 mm. Die Bremseinheit weist Bohrungen auf, die zur Anbringung mechanischer Verstärkungen (metal clips) dienen. Eine Bildung dieser Bohrungen im voraus ist im Hinblick auf die in dieser Druckschrift beschriebenen Herstellung der Siliziumkarbidschicht unwahrscheinlich, da solche Bohrungen beim Aufstreuen der Siliziumpulver sowie dem anschließenden Erhitzen des Pulvers bis zum Flüssigwerden ein Zulaufen, also ein Verstopfen, solcher Bohrungen zur Folge hätte. Diese definiert vorhandenen Bohrungen können erfahrungsgemäß nur nach Fertigstellung der Reibeinheit gebohrt werden, entsprechend einer üblichen Praxis.

Aus der EP-A-051 535, insbesondere aus Beispiel 3, ist das Übereinanderstapeln von Kohlenstoffasern zur Bildung eines Kohlentstoffkörpers bekannt. Zwei solcher Kohlenstoffkörper werden mittels eines Gemisches aus 100 Teilen Kohlenstoffpulver, 35 Teilen Furan-Kunstharz unter Hinzufügen von Glasperlen mit einem Durchmesser von 0,2 mm bis zu 3 Vol.-% verbunden.

Die DE-A-41 27 113 offenbart eine Bremsbacke, die üblicherweise aus einem Träger und einem Reibbelag aufgebaut ist. Sowohl der Reibbelag als auch der Träger sind aus Sinterwerkstoff gefertigt und werden durch Sintern miteinander verbunden. Die Bremsbacke weist auch Öffnungen bzw. Bohrungen auf, die von der Außenseite eingebracht sind und zum Hindurchstecken von Stiften oder Zapfen der Bremsbackenführung oder zur Befestigung von Verschleißanzeigevorrichtungen dienen. Darüberhinaus kann der Träger auf der dem Bremskolben zugekehrten Seite Kühlnuten besitzen, wobei es sich auch hier um von außen eingebrachte Nuten handelt. Die Bohrungen werden, um die Bolzen aufzunehmen, durch entsprechende Ausgestaltung des Sinterwerkzeugs gebildet und entstehen also erst während des Preß- und Sintervorgangs, und nicht im voraus.

Ausgehend von dem vorstehend beschriebenen Stand der Technik liegt der vorliegenden Erfindung die Aufgabe zugrunde, ein Verfahren zur Herstellung einer solchen Reibeinheit der eingangs beschriebenen Art derart weiterzubilden, daß sie einer erhöhten Wärmebelastung Stand hält und die darüberhinaus in einfacher Weise herstellbar ist.

Die vorstehende Aufgabe wird durch die Merkmale des Anspruchs 1 gelöst. Üblicherweise ist, wie allgemein bekannt ist, keramisches Material oder keramisiertes Material äußerst schwierig zu bearbeiten, so daß Strukturierungen in solchen bisher bekannten Reibeinheiten nur unter erhöhtem Aufwand gebildet werden konnten. Insofern wurden solche Strukturierungen nur am Außenumfang zum Beispiel in Form von radialen Bohrungen derartiger Bauteile vorgenommen, um den Reibeinheiten beispielsweise die erforderliche Außenkontur zu verleihen. Mit dem erfindungsgemäßen Verfahren ist es möglich, auch komplizierte Strukturen in Form von Ausnehmungen aufzubauen, da solche Ausnehmungen in einem Zustand des Kohlenstoffkörpers gebildet werden, in dem noch keine Keramisierung, die durch Infiltration von Silizium mit anschließender Wärmebehandlung erfolgt, vorliegt. Darüberhinaus können mit der erfindungsgemäßen Verfahrensweise nicht nur Ausnehmungen, sondern auch geschlossene oder nur teilweise umschlossene Hohlräume innerhalb der Reibeinheit an genau definierten Stellen erzeugt werden. Eine solche Einbringung von Hohlräumen und/oder Ausnehmungen in dem Körper erfolgt praktisch in einem grünen Zustand des Kohlenstoffkörpers, in dem er noch mechanisch einfach bearbeitbar ist bzw. in einem Zustand, in dem der Kohlenstoffaserkörper an sich aufgebaut und strukturiert wird. Mit dieser Verfahrensweise ist unter dem Kostenaspekt eine preiswerte Herstellung von Reibeinheiten in einer Serienproduktion möglich. Solche Strukturierungen mittels Ausnehmungen und/oder Hohlräumen, die zum einen dazu dienen können, eine Reibeinheit, beispielsweise eine Bremsscheibe, auszusteifen, allerdings inbesondere dazu dienen, Hohlräume zur Kühlung zu schaffen, sind bei solchen keramisierten Reibeinheiten besonders wichtig, da solche keramisierten Reibeinheiten gerade unter sehr hohen Belastungen und damit hohen Temperaturen eingesetzt werden. Einsatzgebiete sind beispielsweise Bremseinheiten von Flugzeugen sowie Schienenfahrzeugen und Hochleistungskraftfahrzeugen.

Eine besonders günstige Verfahrensweise ist dann gegeben, wenn als Vorprodukt des porösen Kohlenstoffkörpers zunächst ein Grünkörper gebildet wird, der ein mit ausgehärteten Polymeren durchsetzter Kohlenstoffaserkörper ist. Eine solche Verfahrensweise unter Bildung eines Vorkörpers aus Kohlenstoffasern, die mit Polymeren überzogen sind, bringt besondere Vorteile hinsichtlich der anschließenden Silizium-Infiltrationstechnik. Ein Körper in Form einer Kohlenstoffasermatrix mit ausgehärteten Polymeren stellt ein Vorprodukt dar, das bereits ausreichend gehärtet und verfestigt ist, um es definiert mechanisch bearbeiten zu können. Die Einbringung der Ausnehmungen und Hohlräume kann auch in einer Verfahrensstufe der Herstellung solcher Reibeinheiten vorgenommen werden, in der das Vorprodukt bereits vorhanden ist, das sowohl mechanisch als auch in formgebender Weise einfach gestaltet werden kann.

Um in einfacher Weise innerhalb der Reibeinheit geschlossene Hohlräume oder teilweise umschlossene. Hohlräume zu bilden, ist es möglich, in den Kohlenstoffaserkörper vor seiner Keramisierung, vorzugsweise in einem Zustand vor seiner Infiltration mit Silizium, und darüberhinaus bevorzugt im Rahmen des Grünkörpers, der als mit Polymeren durchzogene Kohlenstoffasermatrix bereitgestellt wird, einen oder mehrere Kerne einzubringen, deren Abmessungen den zu bildenden Ausnehmungen und/oder Hohlräumen entsprechen. Als Werkstoff für die Kerne eignen sich Gummi, Kunststoff, Metall, Keramik oder Kohlenstoff, wobei die Materialien dahingehend ausgewählt werden, ob es sich bei einem solchen Kern um einen verlorenen Kern handelt oder um einen Kern, der in einer bestimmten Aufbaustufe des Kohlenstoffkörpers entfernt wird. Beispielsweise ein Kern aus Styropor oder Hartschaum-Kunststoff weist einen Vorteil dahingehend auf, daß er vor der Silizium-Infiltration aus der Reibeinheit mittels eines Lösungsmittels, beispielsweise über eine Belüftungsöffnung, herausgelöst werden kann. Ein Kern aus Metall, Keramik oder Kohlenstoff wird bevorzugt zur Bildung von Ausnehmungen eingesetzt. Ein solcher Kern aus Metall, Kohlenstoff oder Keramik kann dazu verwendet werden, beim Aufbau der Kohlenstoffasermatrix zunächst in die Fasermatrix eingebettet zu werden,aus der er dann herausgenommen wird, bevor im Aufbau des Kohlenstoffaserkörpers die Ausnehmung beispielsweise durch eine Deckschicht vollständig abgeschlossen wird. Nach der Silizium-Infiltration können solche Kerne, die von außen zugänglich sind, herausgelöst werden, beispielsweise aus radial nach außen verlaufenden Kanälen, die einen in etwa gleichmäßigen Querschnitt von der Innenseite zur Außenseite bzw. eine geringfügige Querschnittserweiterung von einer radial innenliegenden Seite zu einer radial außenliegenden Seite der Reibeinheit besitzen. Solche Kerne bestehen vorzugsweise aus Kohlenstoff oder Keramik, da sie den Temperaturen in den einzelnen Verfahrensschritten zur Herstellung der Reibeinheit standhalten. Auch ein Kern, der aus Gummi gebildet ist, ist dazu geeignet, daß er nach dem Aufbau eines Vorkörpers aus diesem herausgezogen wird; eine solche Entnahme von Gummikernen muß in einem Verfahrenszustand erfolgen, in dem das Gummimaterial des Kerns noch keiner hohen Temperaturbelastung unterworfen ist.

Weiterhin ist es bevorzugt, Kerne aus einem pyrolysierbaren Material zu verwenden, bevorzugt Kerne aus Polyvinylalkohol, um insbesondere Hohlräume im Inneren der Reibeinheit herzustellen, die später nicht zugänglich sind, unter Umständen auch keine Belüftungs- oder Entlüftungsöffnungen zur Außenseite der Reibeinheit hin besitzen. Pyrolysierbares Material wird nämlich im Rahmen der Pyrolyse des Kohlenstoffkörpers, insbesondere eines Kohlenstoffkörpers in Form einer Kohlenstoffasermatrix mit einer polymeren Durchsetzung, pyrolysiert und im wesentlichen rückstandsfrei beseitigt.

Um eine Reibeinheit insbesondere im Bereich der Hohlräume oder Ausnehmungen mit erhöhten, mechanischen Festigkeitswerten auszustatten, werden beim Aufbau des kohlenstoffaserverstärkten Kohlenstoffkörpers die Ausnehmungen und Hohlräume mit Lagen oder Schichten aus Kohlenstoffasern mit vorgegebener Orientierung umgeben. Die Orientierung der Faser kann hierbei den in der Reibeinheit auftretenden Kräften und Beanspruchungen angepaßt werden. Diese Faserschichten begrenzen also solche Ausnehmungen oder Hohlräume in der Reibeinheit. Für Hohlräume, die im Innern der Reibeinheit gebildet werden sollen und im Bereich derer die Reibeinheit eine erhöhte Festigkeit aufweisen soll, werden zunächst Kerne mit solchen Faserschichten umgeben und diese Kerne dann in die Kohlenstoffasermatrix eingesetzt. Bei solchen Kernen kann es sich wiederum um verlorene Kerne handeln oder um Kerne, die in einer vorgegebenen Verfahrensstufe des Aufbaus der Reibeinheit entfernt werden.

Um in einfacher Weise im Inneren einer Reibeinheit Hohlräume zu bilden, insbesondere solche Hohlräume, die keine Verbindung zur Außenseite der Reibeinheit besitzen, wird die Reibeinheit aus zwei einzelnen Körpern aufgebaut, die auf einer Außenseite Ausnehmungen besitzen. Die beiden Körper werden dann miteinander verbunden, so daß die Ausnehmungen des einen Körpers durch den jeweils anderen Körper abgedeckt und verschlossen werden. Es ist ersichtlich, daß solche Ausnehmungen sowohl in beiden Körpern gebildet werden können, die sich dann in verbundenem Zustand zu einem gemeinsamen Hohlraum ergänzen; es ist auch die Möglichkeit gegeben, die Ausnehmungen nur in dem einen Körper zu bilden und den anderen Körper als Abdeckscheibe auszubilden. Je nach Aufbau der Reibeinheit können beide Körper identische Teile sein, die dann miteinander verbunden sind. Darüberhinaus ist gerade durch einen mehrteiligen Aufbau der Reibeinheit nicht nur die Möglichkeit gegeben, in einfacher Weise Hohlräume im Innern der Reibeinheit zu bilden, sondern auch die Möglichkeit gegeben, die Reibeinheit, beispielsweise in Form einer Brems- oder Kupplungsscheibe, den für den Einsatz geforderten Eigenschaften anzupassen, d.h. der eine Körper wird als Reibkörper ausgebildet, während der andere Körper als Kernkörper dienen kann. Der Reibkörper trägt hierbei die Reibfläche für einen reibenden Eingriff mit einem entsprechenden Gegenkörper und wird hinsichtlich seiner Reibeigenschaften materialmäßig angepaßt. Der Kernkörper dient als Trägerkörper für den Reibkörper und wird beispielsweise an einer Nabe eines Fahrzeugs befestigt. Ein solcher Kernkörper sollte dann vorteilhafterweise die Kühlkanäle und Hohlräume aufweisen und hinsichtlich seiner Materialeigenschaften so angepaßt werden, daß er eine gute Wärmeleit- und Wärmespeicherfähigkeit besitzt.

Weitere Einzelheiten und Merkmale der Erfindung ergeben sich aus der nachfolgenden Beschreibung von Ausführungsbeispielen anhand der Zeichnungen. in der Zeichnung zeigt:
- Figur 1: einen Querschnitt durch eine Vorform eines Kohlenstoffkörpers aus einer Kohlenstoffasermatrix für eine Reibeinheit, beispielsweise eine Bremsscheibe, mit zwei in einer Oberseite gebildeten Ausnehmungen,
- Figur 2: eine Vorform, ähnlich der Figur 1, die in einer Formgebungseinheit aufgebaut ist,
- Figur 3: einen Schnitt durch eine Reibeinheit mit zwei inneren, geschlossenen Hohlräumen,
- Figur 4: ein Vorprodukt in Form eines Grünkörpers mit zwei durch Kerne ausgefüllte Ausnehmungen und schematisch angedeuteter Struktur des Faserverlaufs der Kohlenstoffasermatrix,
- Figur 5: eine der Figur 4 entsprechende Schnittdarstellung mit zwei umschlossenen, durch jeweils einen Kern ausgefüllte Hohlräume,
- Figuren 6 und 7: eine Schnittdarstellung von jeweiligen Reibeinheiten, die aus zwei Kohlenstoffkörpern entsprechend der Vorform der Figur 1 mittels einer Fügetechnik hergestellt sind, und
- Figur 8: einen Schnitt einer Reibeinheit darstellt, der mit einem Körper entsprechend der Vorform der Figur 1 mit einer zusätzlichen Abdeckscheibe hergestellt ist.

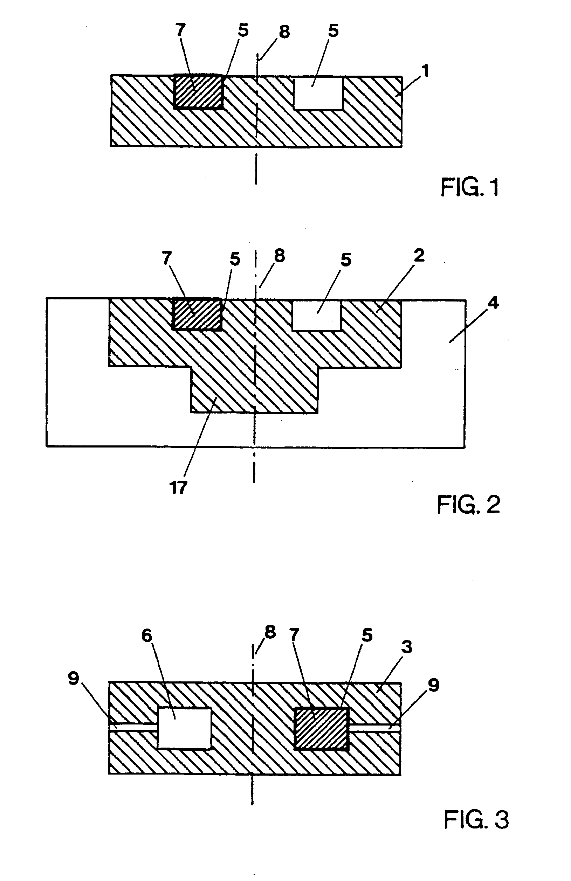

In den Figuren 1 bis 3 sind verschiedene Vorprodukte 1, 2 und 3 aus einer Kohlenstoffasermatrix dargestellt, die eine äußere Form besitzen, die in etwa der fertigen, herzustellenden Reibeinheit entspricht. Vorzugsweise werden zum Herstellen solcher Vorprodukte 1, 2 und 3 auf einer (nicht dargestellten) Unterlage oder in einer Form 4, wie sie die Figur 2 zeigt, Kohlenstoffasern unterschiedlicher Längen geschichtet, gegebenenfalls mit gewebten Kohlenstoffasereinlagen, so daß sich die jeweiligen Vorprodukte 1, 2 und 3 aufbauen. Der Einsatz einer Form 4 gemäß Figur 2 hat den Vorteil, daß in einfacher Weise dem Vorprodukt 2 eine Außenkontur reproduzierbar gegeben werden kann, die in etwa der Außenkontur der keramisierten Reibeinheit, abgesehen von Dimensionsänderungen aufgrund von geringen Schrumpfungen während der Keramisierung, entspricht. Vorzugsweise werden als Kohlestoffasern solche eingesetzt, die mit einer Polymerschicht überzogen sind. Alternativ dazu kann ein aus Kohlenstoffasern aufgebauter Körper anschließend mit Polymeren infiltriert werden und anschließend ein solcher Vorkörper ausgehärtet werden, so daß in der Kohlenstoffmatrix eine Polymermatrix erzielt wird und gleichzeitig das gesamte Vorprodukt 1, 2 oder 3 eine Formstabilität erhält.

Im Rahmen des Aufbaus des Vorprodukts 1, 2 oder 3 werden, um Ausnehmungen 5 oder umschlossene Hohlräume 6 zu bilden, Kerne 7 eingelagert, die in ihrer Form und Größe der zu bildenden Ausnehmung 5 bzw. dem Hohlraum 6 entspricht. In den Figuren 1 und 2 ist beispielsweise jeweils ein Kern 7 dargestellt, der in den Kohlenstoffaserkörper eingesetzt ist und der nach Verfestigung zum Vorprodukt aus diesem herausgenommen wird, so daß die Ausnehmung 5, wie sie jeweils in der rechten Hälfte der Schnittdarstellung der Figuren 1 und 2 dargestellt ist, verbleibt. Je nach Form des Kerns kann eine solche Ausnehmung einen runden, ovalen oder eckigen Querschnitt besitzen oder aber zu der Achse 8 des jeweiligen Vorprodukts 1, 2 rotationssymmetrisch verlaufen, so daß die beiden Ausnehmungen der Vorprodukte der Figuren 1 und 2 jeweils einen Raum bilden, der zum Beispiel in Form einer Evolute entsprechend der günstigsten, aerodynamischen Gestalt des Kühlkanals gebildet werden kann bzw. als Kern ein evolutenförmiger Kern eingesetzt wird. Gleiches gilt für die Hohlräume 6 des Vorprodukts der Figur 3.

Vorzugsweise werden als Kerne 7 zur Bildung der Ausnehmungen 5 Kerne aus einem solchen Material eingesetzt, das den einzelnen Wärmebehandlungsstufen zur Herstellung des Vorprodukts, standhalten kann, d.h. vorzugsweise Kerne aus Metall, Keramik oder Kohlenstoff. Solche Kerne können dann beliebig oft, nachdem sie aus dem Vorprodukt 1, 2 und 3 entfernt sind, zum Erstellen weiterer Reibeinheiten eingesetzt werden.

Um Hohlräume 6 zu bilden, wie sie in dem Vorprodukt 3 der Figur 3 dargestellt sind, werden beim Aufbau der Kohlenstoffasermatrix ebenfalls Kerne eingesetzt, die jedoch in irgendeiner Weise wieder aus dem Vorprodukt entfernt werden müssen. Aus diesem Grund werden vorzugsweise in diese Hohlräume Kerne aus Styropor oder Hartschaum-Kunststoff eingelegt, die dann, in einer verfestigten Stufe des Vorprodukts 3 mittels eines Lösemittels herausgelöst werden, das beispielsweise über Belüftungskanäle 9, die eine Verbindung von der Außenseite zu den Hohlräumen 6 besitzen, eingefüllt wird. Diese Belüftungskanäle können anschließend mit pyrolisierbarem Material, das einen hohen Kohlenstoffrückstand nach der Pyrolyse aufweist, gefüllt und durch anschließende Keramisierung geschlossen werden. Eine andere Möglichkeit, die Hohlräume 6 mittels verlorener Kerne 7 zu erzeugen, ist diejenige, daß ein Kern aus einem pyrolysierbaren Material eingebracht wird, das in einem folgenden Verfahrensschritt, in dem der Kohlenstoffaserkörper einer Pyrolyse unterworfen wird, beispielsweise um eine entsprechende Polymermatrix zu pyrolysieren, im wesentlichen rückstandsfrei beseitigt wird. In diesem Fall ist es nicht erforderlich, spezielle Belüftungskanäle 9 vorzusehen. Ein Vorprodukt, wie es in den Figuren 1 bis 3 dargestellt wird, wird in einem weiteren Verfahrensschritt dann mit flüssigem Silizium infiltriert, das unter Wärmebehandlung zu Siliziumkarbid umgewandelt wird, so daß die fertige, keramisierte Reibeinheit erhalten wird.

Eine weitere Möglichkeit, Hohlräume 6 in einem Vorprodukt zu bilden, wie dies in Figur 3 dargestellt ist, ist diejenige, im Bereich der Hohlräume Kerne 7 aus Gummi einzulegen. Solche Gummikerne sind dann zu bevorzugen, wenn die Hohlräume 6 zur Außenseite der Reibeinheit hin führende Kanäle besitzen sollen, entsprechend den Belüftungskanälen 9, allerdings mit einem größeren Querschnitt, so daß nach Fertigstellung des Vorprodukts 3 die elastomeren Kernteile über diese Kanäle 9 herausgezogen werden können. Auf diese Art und Weise können innenliegende Hohlräume 6 gebildet werden, die gegenüber den Kanälen 9 Hinterschneidungen besitzen, so daß diese elastomeren Kerne über die gegenüber den Hohlräumen einen kleineren Querschnitt aufweisenden Kanäle 9 herausgezogen werden können.

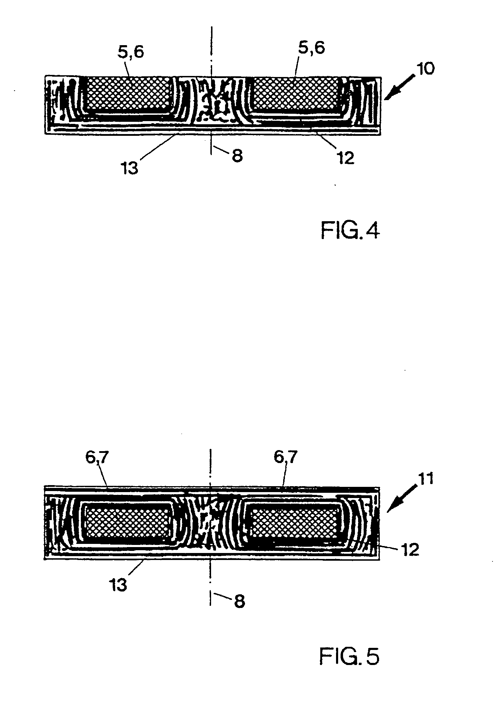

Die Figuren 4 und 5 zeigen Schnittdarstellungen von Vorprodukten 10 und 11, die in ihrem Aufbau den Vorprodukten 1 und 3 der Figuren 1 und 3 im wesentlichen entsprechen. In den Figuren 4 und 5 sind allerdings um die Ausnehmung 5 bzw. einen darin eingelegten Kern 7 (Figur 4) bzw. den Hohlraum 6 und einen darin eingelegten Kern 7 (Figur 5) definiert, der Kontur der Ausnehmung bzw. des Hohlraums folgende Kohlentstoffaserschichten 12 gezeigt, die so orientiert sind, daß sie den auftretenden Kräften in der späteren Reibeinheit angepaßt sind und eine besonders stabile und feste Struktur der Kohlenstoffasermatrix ergeben. Solche Kohlenstoffaserschichten 12 können im Rahmen des Aufbaus der Kohlenstoffasermatrix um vorgefertigte Kerne 7 zum Beispiel aus Styropor oder Hartschaumstoff herum gelegt werden und solche vorgefertigten Kerne können dann in die Kohlenstoffasermatrix eingesetzt werden. Entsprechend der Verfahrensweise, die im Rahmen der Ausführung der Figur 3 vorstehend beschrieben ist, können solche Verfahren später über entsprechende, in der Figur 5 nicht dargestellte, Belüftungskanäle herausgelöst werden. Die einzelnen Kernkörper bzw. die um den Kernkörper herumgewickelten Kohlenstoffaserschichten 12 können dann von Kohlenstoffaserdeckschichten 13 umgeben werden. Wie die Ausführungsformen der Figuren 4 und 5 verdeutlichen, können die Strukturen der Reibeinheiten, die erstellt werden sollen, in einem grünen Zustand beliebig geformt und aufgebaut werden, gegebenenfalls das Vorprodukt nach einer Aushärtung, allerdings vor der Siliziuminfiltrierung und Keramisierung, mechanisch bearbeitet werden; es ist also nicht erforderlich, ein keramisches Material zu bearbeiten.

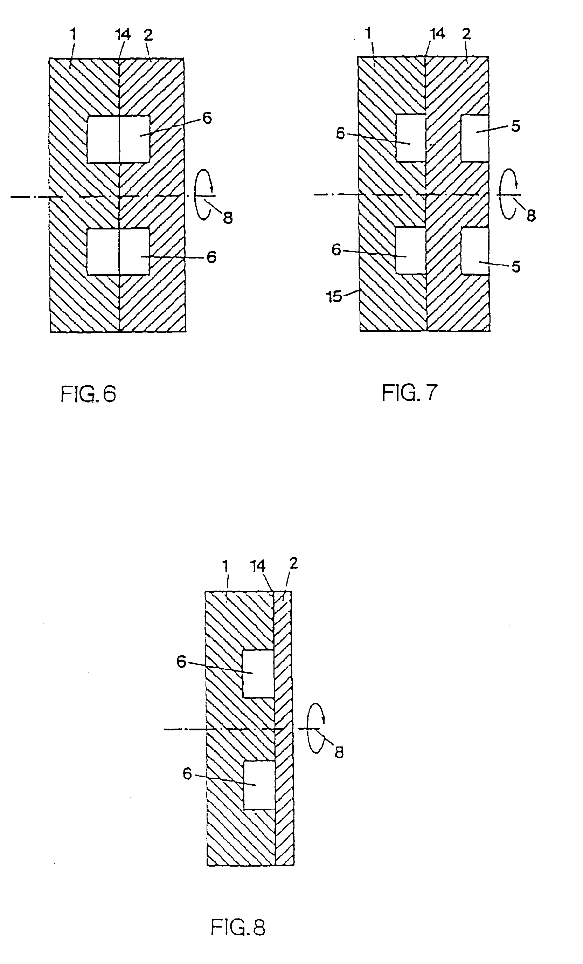

Den Figuren 6 bis 8 sind verschiedene Ausführungsformen von modular aufgebauten, integralen Reibeinheiten dargestellt, die unter Verwendung von Vorprodukten aufgebaut sind, wie sie in den Figuren 1 und 2 dargestellt sind. Demzufolge sind in den Figuren 6 und 8 für die Körper 1 und 2 dieselben Bezugsziffern verwendet. Die jeweiligen Vorprodukte können entlang einer Verbindungsstelle bzw. Verbindungsebene, die mit den Bezugszeichen in den einzelnen Figuren 6 bis 8 mit dem Bezugszeichen 14 bezeichnet sind, aufeinandergelegt werden und anschließend miteinander verbunden werden. Als Vorprodukte oder als einzelne Modulteile für die Reibeinheiten entsprechend der Figuren 6 bis 8 können Vorprodukte 1, 2 in ihrer grünen, d.h. noch nicht keramisierten, Form eingesetzt werden; die Verbindungsstelle 14 wird dann im Rahmen der silizium-Infiltration der beiden Vorprodukte 1, 2 gefüllt und damit eine Verbindung, die im wesentlichen Karbid enthält, der beiden Körper vorgenommen. Einzelne Körper 1, 2, die für sich jeweils bereits mit Silizium infiltriert und keramisiert sind, können allerdings in diesem keramisierten Zustand beispielsweise durch ein hochtemperaturbeständiges Hartlot, vorzugsweise mittels Silizium, zusammengefügt werden.

Wie die Figur 6 zeigt, können aus zwei Körpern 1, wie sie in der Figur 1 dargestellt sind, Hohlräume 6 gebildet werden, indem sich die einzelnen Ausnehmungen 5 des Vorprodukts 1 durch ihre identische Ausrichtung zu der Achse 3 bzw. Der Drehachse der Reibeinheit (Figuren 6 bis 9) zu diesem Hohlraum 6 ergänzen. In einem solchen Aufbau ist es nicht erforderlich, aus den Hohlräumen 6 irgendwelche, im Rahmen des Aufbaus der Kohlenstoffasermatrix verbleibenden Kerne zu entfernen.

In Figur 7 ist eine Ausführungsform dargestellt, bei der die Reibeinheit aus zwei Vorprodukten, entlang der Verbindungsebene 14 zusammengefügt sind, derart, daß sie jeweils in der gleichen Richtung ausgerichtet, sind, so daß sich zum einen die ursprünglichen Ausnehmungen in dem Vorprodukt 1 mit der Außenfläche des anderen Vorprodukt 1 zu den Hohlräumen 6 ergänzen, während die Ausnehmungen 5 des anderen Vorprodukts 1 an der Außenseite als solche unverschlossen erhalten bleiben. Das erste Vorprodukt 1 kann beispielsweise in dieser Anordnung als Reibkörper dienen, wobei dessen glatte Außenfläche eine Reibfläche 15 bildet, während das andere Vorprodukt 1 einen Kernkörper darstellt. Diese Unterteilung in einen Reibkörper und einen Kernkörper zielt darauf, diese beiden Körper in ihren Materialeigenschaften den jeweiligen Erfordernissen anzupassen, d.h. der Reibkörper wird mit guten Reibeigenschaften an der Reibfläche 15 ausgestattet, während Der Kernkörper zum einen eine hohe mechanische Festigkeit besitzen soll, um quasi einen Tragekörper der Reibeinheit zu bilden, zum anderen soll er eine gute Wärmeleitfähigkeit und Wärmespeicherfähigkeit besitzen, um die an der Reibfläche 15 entstehende Wärme abzuführen.

Die Anpassung der jeweiligen Körper, die zu einer Reibeinheit verbunden sind, wie dies vorstehend anhand der Figur 7 erläutert ist, trifft sinngemäß auch auf die Anordnungen der Figuren 6 und 8 zu.

Figur 8 stellt eine Variante dar, in der der Körper 1 der Figur 1 auf der Seite der Ausnehmungen 5 mit einer Abdeckplatte 18 abgedeckt ist, so daß entsprechende Hohlräume entstehen.

Wie die verschiedenen Ausführungsformen zeigen, ist mit der erfindungsgemäßen Verfahrensweise der Bildung von Ausnenmungen und Hohlräumen in einer Verfahrensstufe, in der die jeweiligen Ausgangskörper noch leicht formbar und bearbeitbar sind, gegeben. Darüberhinaus können mit einer derartigen Technologie, insbesondere auch dann, wenn eine Reibeinheit aus mehreren einzelnen Körpern zusammengesetzt wird, insbesondere in noch nicht keramisiertem Zustand, auch sehr komplexe Strukturen durch die Fügung dieser einzelnen Körper aufgebaut werden.

## Patentansprüche

1. Verfahren zur Herstellung einer Reibeinheit zum reibenden Eingriff mit einem Gegenkörper, insbesondere zur Herstellung eines Brems- oder Kupplungskörpers, bei dem ein poröser Kohlenstoffkörper, der etwa der Endkontur der Reibeinheit entspricht, bereitgestellt wird, die Poren dieses Kohlenstoffkörpers mit flüssigem Silizium infiltriert werden und durch Einleiten einer chemischen Reaktion unter Bildung von Siliziumkarbid der Körper keramisiert wird, **dadurch gekennzeichnet, dass** vor der Silizium-Infiltration der poröse Kohlenstoffkörper so strukturiert ist, dass in definierten Innenbereichen zur Kühlung geschlossene und/oder nur teilweise umschlos- sene Hohlräume und/oder Ausnehmungen gebildet werden, die nach der Keramisierung in ihrer Form und Größe im wesentlichen beibehalten werden.

2. Verfahren nach Anspruch 1, **dadurch gekennzeichnet, dass** der poröse Kohlenstoffkörper und/oder der Grünkörper durch mechanische Bearbeitung mit Ausnehmungen versehen wird (werden).

3. Verfahren nach einem der Ansprüche 1 oder 2 , **dadurch gekennzeichnet, dass** in den porösen Kohlenstoffkörper und/oder den Grünkörper bei dem Aufbau ein Kern (Kerne) eingebracht wird (werden), der (die) in seinen (ihren) Abmessungen den zu bildenden Ausnehmungen und/oder Hohlräumen entspricht (entsprechen).

4. Verfahren nach Anspruch 3, **dadurch gekennzeichnet, dass** der Kern vor und/oder nach der Silizium-Infiltration entfernt wird.

5. Verfahren nach Anspruch 4, **dadurch gekennzeichnet, dass** der Kern aus Gummi, Kunststoff, Metall, Keramik oder Kohlenstoff gebildet wird.

6. Verfahren nach Anspruch 5, **dadurch gekennzeichnet, dass** der Kern aus Styropor oder Hartschaum-Kunststoff gebildet wird.

7. Verfahren nach Anspruch 6, **dadurch gekennzeichnet, dass** der Kern mittels eines Lösungsmittels herausgelöst wird.

8. Verfahren nach Anspruch 3, **dadurch gekennzeichnet, dass** ein Kern aus pyrolisier-barem Material eingebracht und in einem folgenden Verfahrensschritt der Kohlenstoffkörper einer Pyrolyse unterworfen und der Kern rückstandsfrei beseitigt wird.

9. Verfahren nach Anspruch 8, **dadurch gekennzeichnet, dass** der Kern aus Polyvinylalkohol gebildet wird.

10. Verfahren nach einem der Ansprüche 1 bis 9, **dadurch gekennzeichnet, dass** im Bereich der Hohlräume und/oder der Ausnehmungen in den Kohlenstoffkörper die Hohlräume und/oder die Ausnehmungen begrenzende Kohlenstofffaserschichten mit vorgegebener Orientierung eingebracht werden.

11. Verfahren nach Anspruch 3 und 10, **dadurch gekennzeichnet, dass** die Kohlenstofffaserschichten auf dem Kern (den Kernen) aufgebaut werden.

12. Verfahren nach einem der Ansprüche 1 bis 11, **dadurch gekennzeichnet, dass** der Kohlenstoffkörper einen ersten Körper bildet und mit wenigstens einem zweiten Körper verbunden wird, wobei der zweite Körper einen Teil der Reibeinheit bildet.

13. Verfahren nach Anspruch 12, **dadurch gekennzeichnet, dass** der zweite Körper ein nach einem der Ansprüche 1 bis 11 hergestellter zweiter Kohlenstoffkörper ist.

14. Verfahren nach Anspruch 12 oder Anspruch 13, **dadurch gekennzeichnet, dass** der erste Körper als Reibkörper mit einer Reibfläche aufgebaut wird.

15. Verfahren nach Anspruch 14, **dadurch gekennzeichnet, dass** der zweite Körper als Kernkörper mit einer guten Wärmeleit- und/oder Wärmespeicherfähigkeit ausgebildet wird.

16. Verfahren nach einem der Ansprüche 12 bis 15, **dadurch gekennzeichnet, dass** in den ersten und den zweiten Körper Ausnehmungen derart im Bereich ihrer Verbindungsflächen eingebracht werden, dass sie sich zu einem gemeinsamen Hohlraum ergänzen.

## Claims

1. Method of manufacturing a friction unit for frictional engagement with a counter-body, in particular for the manufacture of a brake or clutch body, in which a porous carbon body is prepared which corresponds approximately to the final contour of the friction unit, the pores of this carbon body are infiltrated with fluid silicon and the body is ceramicized by introducing a chemical reaction with the formation of silicon carbide, **characterized in that**, before the silicon infiltration, the porous carbon body is so structured that closed and/or only partially enclosed cavities and/or recesses are formed in defined inner areas for cooling, which are substantially retained in their shape and size after the ceramicization.

2. Method according to claim 1, **characterized in that** the porous carbon body and/or the green body is (are) provided with recesses by mechanical working.

3. Method according to claim 1 or 2, **characterized in that** a core (cores) is (are) embedded in the porous carbon body and/or green body in the making, which in its (their) dimensions correspond to the recesses and/or cavities to be formed.

4. Method according to claim 3, **characterized in that** the core is removed before and/or after the silicon infiltration.

5. Method according to claim 4, **characterized in that** the core is formed of rubber, plastic, metal, ceramic or carbon.

6. Method according to claim 5, **characterized in that** the core is formed of Styropor or hard foam plastic.

7. Method according to claim 6, **characterized in that** core is dissolved out by means of solvent.

8. Method according to claim 3, **characterized in that** a core of pyrolyzable material is embedded and that in a following process step the carbon body is subjected to pyrolysis and the core is eliminated residue-free.

9. Method according to claim 8, **characterized in that** the core is formed of polyvinyl alcohol.

10. Method according to one of claims 1 to 9, **characterized in that** in the area of the cavities and/or recesses, carbon fiber layers of a given orientation limiting the cavities and/or recesses are placed in the carbon body.

11. Method according to claim 3 and 10, **characterized in that** the carbon fiber layers are built up on the core (cores).

12. Method according to any one of claims 1 to 11, **characterized in that** the carbon body forms a first body and is joined with at least one second body, the second body forming a part of the friction unit.

13. Method according to claim 12, **characterized in that** the second body is a second carbon body made according to any one of claims 1 to 11.

14. Method according to claim 12 or claim 13, **characterized in that** the first body is made as a friction body with a friction surface.

15. Method according to claim 14, **characterized in that** the second body is configured as a core body with a good thermal conductivity and/or heat capacity.

16. Method according to any one of claims 12 to 15, **characterized in that** recesses are formed in the first and the second body in the area of their junction surfaces such that they make up a common cavity.

## Revendications

1. Procédé pour la fabrication d'une unité de friction pour l'engrènement par friction avec un corps antagoniste, en particulier pour la fabrication d'un corps de freinage ou d'accouplement pour lequel un corps poreux en carbone qui correspond approximativement au contour final de l'unité de friction est mis à disposition, les pores de ce corps en carbone sont infiltrés avec du silicium liquide et le corps est céramisé en déclenchant une réaction chimique en formant du carbure de silicium, **caractérisé en ce qu'**avant l'infiltration de silicium, le corps poreux en carbone est structuré de telle manière que, dans des zones intérieures définies, des espaces creux et/ou des évidements fermés et/ou seulement partiellement enceints sont formés pour le refroidissement et/ou le renforcement qui sont substantiellement conservés quant à leur forme et leur grandeur après la céramisation.

2. Procédé selon la revendication 1, **caractérisé en ce que** le corps poreux en carbone et/ou le compact vert est (sont) pourvu(s) d'évidements par travail mécanique.

3. Procédé selon l'une des revendications 1 ou 2, **caractérisé en ce qu'**un noyau (des noyaux) est (sont) mis en place dans le corps poreux en carbone et/ou le compact vert, lors de la constitution, noyau(x) qui correspondent dans ses (leurs) dimensions aux évidements et/ou espaces creux à former.

4. Procédé selon la revendication 3, **caractérisé en ce que** le noyau est enlevé avant et/ou après l'infiltration de silicium.

5. Procédé selon la revendication 4, **caractérisé en ce que** le noyau est formé en caoutchouc, en matière plastique, en métal, en céramique ou en carbone.

6. Procédé selon la revendication 5, **caractérisé en ce que** le noyau est formé en polystyrène ou en matière plastique en mousse rigide.

7. Procédé selon la revendication 6, **caractérisé en ce que** le noyau est enlevé au moyen d'un solvant.

8. Procédé selon la revendication 3, **caractérisé en ce qu'**un noyau en matière pyrolisable est mis en place et est soumis à une pyrolyse lors d'une étape suivante de procédé et le noyau est éliminé sans résidus.

9. Procédé selon la revendication 8, **caractérisé en ce que** le noyau est formé en alcool polyvinylique.

10. Procédé selon l'une des revendications 1 à 9, **caractérisé en ce que** les couches de fibres de carbone à orientation prédéterminée qui délimitent des espaces creux et/ou les évidements sont mises en place dans la zone des espaces creux et/ou des évidements dans le corps en carbone.

11. Procédé selon les revendications 3 et 10, **caractérisé en ce que** les couches de fibres de carbone sont constituées sur le noyau (les noyaux).

12. Procédé selon l'une des revendications 1 à 11, **caractérisé en ce que** le corps en carbone forme un premier corps et est relié au moins à un second corps, le second corps formant une partie de l'unité de friction.

13. Procédé selon la revendication 12, **caractérisé en ce que** le second corps est un second corps en carbone fabriqué selon l'une des revendications 1 à 11.

14. Procédé selon la revendication 12 ou la revendication 13, **caractérisé en ce que** le premier corps est constitué comme corps de friction avec une surface de friction.

15. Procédé selon la revendication 14, **caractérisé en ce que** le second corps est configuré comme corps de noyau avec une bonne conductibilité de la chaleur et/ou une bonne capacité d'accumulation de la chaleur.

16. Procédé selon l'une des revendications 12 à 15, **caractérisé en ce que** des évidements sont mis en place dans le premier et le second corps dans la zone de leurs surfaces de jonction de telle manière qu'elles se complètent en un espace creux commun.
